# EUROPÄISCHE PATENTANMELDUNG

(11) **EP 4 067 717 A1**
(43) Veröffentlichungstag der Anmeldung: **05.10.2022**
(21) Anmeldenummer: 22165154.0
(22) Anmeldetag: 29.03.2022
(51) Int. Cl.: F16L 5/04, E04G 15/06, H02G 3/04, H02G 3/22, A62C 2/06, E04C 1/39

(54) **BRANDSCHUTZEINSATZMODUL**

(30) Priorität: 30.03.2021 DE 102021001659
(71) Anmelder: Braunagel, Natali, 88255 Baienfurt (DE)
(72) Erfinder: Braunagel, Natali, 88255 Baienfurt (DE)
(74) Vertreter: SSM Sandmair

(57) **Zusammenfassung**

Erfindungsgemäß wird ein Brandschutzeinsatzmodul (1) zum brandschutzsicheren Verschließen einer zur Durchführung zumindest einer Leitung (2, 3, 4, 5, 6, 7) vorgesehenen Gebäudeöffnung (8), das zumindest im Wesentlichen aus einem nichtbrennbaren Material (9) gebildet ist und zumindest ein Leitungsstück (10, 11, 12, 13), das medienführend oder elektrisch ausgebildet ist, und/oder zumindest eine Brandschutzkabelbox (14) aufweist, das/die in das nichtbrennbare Material (9) integriert ist/sind, vorgeschlagen. Des Weiteren werden ein Herstellverfahren des Brandschutzeinsatzmoduls (1) und ein Verfahren zur brandschutzsicheren Durchführung zumindest einer Leitung (2, 3, 4, 5, 6, 7) durch eine Gebäudeöffnung (8) vorgeschlagen.

## Beschreibung

Die Erfindung liegt auf dem Gebiet des Brandschutzes für Leitungsdurchführungen eines Gebäudes, insbesondere innerhalb des Gebäudes. Die Erfindung betrifft die brandschutzsichere Durchführung von Leitungen, insbesondere im Bereich eines Installationsschachts, eines Gebäudes, beispielsweise eines mehrstöckigen Gebäudes.

Bei Neubauten aber auch beim Umbau bzw. bei der Sanierung von Gebäuden, beispielsweise von Wohn- und Geschäftshäusern, ist auf Grund gesetzlicher Brandschutzbestimmungen auf einen ausreichenden Brandschutz zu achten.

Ein Brandherd entsteht innerhalb eines Gebäudes im Normalfall nur in einem örtlich begrenzten Bereich, beispielsweise in einem Raum. Das Feuer sowie die dabei entstehenden Verbrennungsgase und Rauch breiten sich allerdings ausgehend vom Brandherd innerhalb eines Gebäudes aus. Brandschutznormen und/oder -gesetze zielen nun darauf ab, die Ausbreitung des Feuers sowie der Verbrennungsgase und des Rauches innerhalb des Gebäudes zu verhindern oder zumindest zeitlich zu verzögern.

Insbesondere bei der Durchführung von Leitungen, insbesondere von Ver- und/oder Entsorgungsleitungen sowie Elektroleitungen, durch Gebäudewandungen, wie Wände, Decken oder Böden, sind entsprechende Brandschutzmaßnahmen vorgeschrieben.

Die Leitungen werden häufig in Leerrohren geführt, welche wiederum durch Gebäudewandungen geführt sind. Der Hohlraum in den Leerrohren ermöglicht nun den Durchtritt von Flammen durch die Gebäudewandung. Dies insbesondere dann, wenn die in den Leerrohren geführten Leitungen selbst brennbare Materialien umfassen.

Diese Problematik ist bei Durchführungen durch Decken bzw. Böden noch verschärft, da dort die vertikale Führung für einen zusätzlichen Kamineffekt sorgen kann.

Aus Brandschutzgründen werden daher Gebäudeöffnungen in Gebäudewandungen, wie Wänden und Decken bzw. Böden durch die die Leitungen, insbesondere innerhalb eines Installationsschachts, durchgeführt werden, sogenannte Brandschutzabschottungen eingebaut, um die Leitungen so abzuschotten, dass die Gebäudeöffnung, durch die die Leitungen hindurchgeführt sind, im Brandfall gegen das Durchschlagen von Feuer, Hitze oder Rauch gesichert ist. Dazu wird nach dem Stand der Technik die Gebäudeöffnung mit den bereits hindurchgeführten Leitungen vor Ort mit einem Brandschutzmaterial ausgefüllt und damit verschlossen. So wird beispielsweise die Gebäudeöffnung und die hindurchgeführten Leitungen zur Abschottung mit Brandschutzmörtel vor Ort vergossen.

Dabei ist es nachteilig, dass die Abschottung erst nach dem Verlegen oder Durchführen der Leitungen durch die Gebäudeöffnung erfolgen kann, wodurch die Gefahr von Abstimmungsfehler zwischen den in Regel verschiedenen Fachfirmen besteht und dadurch unter Umständen zu Zeitverzögerungen und Fehlern führen kann. Ferner ist von Nachteil, dass im Fall einer gegossenen Abschottung erst das Erhärten des Brandschutzmaterials abgewartet werden muss, bevor weitere Arbeiten durchgeführt werden können. Durch die bereits verlegten oder durchgeführten Leitungen besteht auch die Gefahr, dass das Material der Leitungen und/oder die Abstände zwischen den Leitungen, das/die zur Erfüllung der geltenden Brandschutzvorschriften notwendig sind, nicht erfüllt werden können, da beispielsweise die zur Verlegung oder Durchführung der Leitungen zuständigen Facharbeiter nicht darauf geachtet oder fehlerhaft verlegt haben, wodurch eine brandschutzsichere Abschottung gemäß geltenden Vorschriften und damit eine brandschutzkonforme Durchführung schwierig oder gar unmöglich macht. Dies kann unter Umständen zusätzliche Kosten verursachen oder gar zu einem Abbruch der Bauarbeiten führen, da die geltenden Brandschutzvorschriften nicht erfüllbar sind.

Insbesondere bei gegossenen Abschottungen ist es ferner umso schwieriger, je mehr Leitungen durch die Gebäudeöffnung verlegt werden müssen. Üblicherweise wird dabei die Gebäudeöffnung so verschlossen, dass ein Verschalungssystem vor Ort eingebracht und anschließend mit Beton oder Brandschutzmörtel ausgefüllt wird. Das Anbringen des Verschalungssystems gestaltet sich aufwendig, da es um alle Leitungen geführt werden muss. Je enger die Leitungen liegen, umso filigraner müssen diese Arbeiten ausgeführt werden. Ein weiteres Problem stellt das Einbringen des Betons/Mörtels in die Öffnungen dar. Die richtige Konsistenz ist für eine funktionelle Brand- und Rauchabschottung unumgänglich. Ist sie zu fließfähig, kann es zum Austritt der Vergussmasse kommen. Eine zu steife Konsistenz führt zu Fehlstellen. In beiden Fällen ist der Brandschutz nicht mehr gewährleistet, da im Brandfall insbesondere Rauch durchdringen kann.

Der Erfindung liegt insbesondere die Aufgabe zugrunde, die brandschutzsichere Durchführung von Leitungen durch eine Gebäudewandung kostengünstig zu vereinfachen. Diese Aufgabe wird gemäß der Erfindung durch die Merkmale des Anspruchs 1, des Anspruchs 10 und des Anspruchs 13 gelöst. Weitere Ausgestaltungen ergeben sich aus den Unteransprüchen.

Ein erster Aspekt der Erfindung betrifft ein vorgefertigtes Brandschutzeinsatzmodul zum brandschutzsicheren Verschließen einer zur Durchführung zumindest einer Leitung vorgesehenen Gebäudeöffnung, das zumindest im Wesentlichen aus einem nichtbrennbaren Material gebildet ist. Das Brandschutzeinsatzmodul weist in seinem Vormontagezustand zumindest ein fest in das nichtbrennbare Material integriertes Leitungsstück auf, das zur Teilausbildung der durchzuführenden Leitung medienführend oder elektrisch ausgebildet ist. Zusätzlich oder alternativ umfasst das Brandschutzeinsatzmodul in seinem Vormontagezustand zumindest eine zur brandschutzsicheren Durchführung wenigstens einer elektrischen Leitung vorgesehene Brandschutzkabelbox, die fest in das nichtbrennbare Material integriert ist. Das Brandschutzeinsatzmodul ist vorzugsweise modulartig ausgebildet. Das zumindest eine Leitungsstück und/oder die zumindest eine Brandschutzkabelbox ist/sind bereits vor dem Verschließen der Gebäudeöffnung und/oder vor einem Verlegen oder Durchführen der zumindest einen Leitung durch die Gebäudeöffnung in das nichtbrennbare Material integriert. Das medienführende oder elektrische Leitungsstück und/oder die Brandschutzkabelbox ist/sind brandschutzkonform in das nichtbrennbare Material integriert. Das medienführende Leitungsstück umfasst oder bildet einen Strömungsquerschnitt für ein flüssiges oder gasförmiges Medium, wie beispielsweise Wasser oder Luft.

Durch das erfindungsgemäße Brandschutzeinsatzmodul kann eine vorgefertigte, brandschutzkonforme Montageeinheit bereitgestellt werden, die bereits alle Brandschutzanforderungen erfüllt und zur brandschutzsicheren Durchführung der Leitungen durch die Gebäudeöffnung vor Ort an der Baustelle lediglich in die Gebäudeöffnung eingesetzt, mit einer die Gebäudeöffnung aufweisenden Gebäudewandung verbunden und medienführend und/oder elektrisch angebunden werden muss. Durch die Integration des Leitungsstücks in das nichtbrennbare Material ist das Leitungsstück bereits brandschutzsicher durchgeführt, wodurch durch eine medienführende oder elektrische Anbindung eines vom Brandschutzeinsatzmodul separaten Leitungsstücks der zu verlegenden oder durchzuführenden Leitungen an das integrierte Leitungsstück eine brandschutzsichere Durchführung der zu verlegenden oder durchzuführenden Leitungen gewährleistet werden kann. Durch die Integration der Brandschutzkabelbox in das nichtbrennbare Material ist die Brandschutzkabelbox bereits brandschutzsicher positioniert, wodurch durch eine Durchführung der zu verlegenden oder durchzuführenden Leitungen durch die integrierte Brandschutzkabelbox eine brandschutzsichere Durchführung gewährleistet werden kann. Das Brandschutzeinsatzmodul kann mit allen notwendigen Leitungsstücken und/oder Brandschutzkabelboxen werkseitig ausgestattet oder vorgefertigt werden, so dass es sich baustellenseitig mit minimiertem Aufwand einbauen lässt. Die brandschutzrelevanten Arbeiten können außerhalb der Baustelle unter konstanten Werksbedingungen durchgeführt werden, wodurch die brandschutzsichere Durchführung von Leitungen kostengünstig vereinfacht und gewährleistet werden kann.

Das Brandschutzeinsatzmodul dient vorteilhaft als einbaufertiger Einsatz in die Gebäudeöffnung zur brandschutzsicheren Durchführung zumindest einer Leitung, insbesondere im Bereich eines Installationsschachts eines Gebäudes. Vorzugsweise füllt das in die Gebäudeöffnung eingesetzte Brandschutzeinsatzmodul die Gebäudeöffnung zumindest im Wesentlichen vollständig aus. Vorzugsweise ist das Leitungsstück und/oder die Brandschutzkabelbox fest in das nichtbrennbare Material eingebettet. Das Brandschutzeinsatzmodul kann auch als ein vorgefertigter, einbaufertiger Brandschutzschotteinsatz mit wenigstens einem fest integrierten oder eingebetteten, medienführenden oder elektrischen Leitungsstück und/oder mit wenigstens einer fest integrierten oder eingebetteten Brandschutzkabelbox bezeichnet werden. Unter "zumindest im Wesentlichen" soll insbesondere entweder im Wesentlichen oder gänzlich verstanden werden. Unter "im Wesentlichen" soll insbesondere mindestens zu 70%, vorteilhaft mindestens zu 80% und besonders vorteilhaft mindestens zu 90% verstanden werden.

Vorzugsweise ist zwischen einer Außenmantelfläche des Leitungsstücks und dem nichtbrennbaren Material, insbesondere einer Innenmantelfläche des nichtbrennbaren Materials, kein Spalt oder Hohlraum gebildet. Vorzugsweise ist zwischen einer Außenmantelfläche der Brandschutzkabelbox und dem nichtbrennbaren Material, insbesondere einer Innenmantelfläche des nichtbrennbaren Materials, kein Spalt oder Hohlraum gebildet. Vorteilhaft ist das Leitungsstück und/oder die Brandschutzkabelbox zerstörungsfrei nicht von dem nichtbrennbaren Material lösbar. Durch das integrierte Leitungsstück wird die durchzuführende oder zu verlegende Leitung vorzugsweise separiert. Die zu verlegende Leitung weist vorteilhaft das integrierte Leitungsstück und zumindest ein, insbesondere zwei, von dem Brandschutzeinsatzmodul separate/s Leitungsstück/e auf, die medienführend oder elektrisch miteinander verbindbar sind. Unter einem "integrierten Leitungsstück" soll insbesondere das in dem nichtbrennbaren Material des Brandschutzeinsatzmoduls fest integrierte Leitungsstück verstanden werden. Unter einem "separaten Leitungsstück" soll insbesondere ein vom Brandschutzeinsatzmodul separates, vorzugsweise in dem nichtbrennbaren Material des Brandschutzeinsatzmoduls nicht integriertes, Leitungsstück verstanden werden. Unter einer "Brandschutzkabelbox" soll insbesondere eine eigenständige Vorrichtung zur brandschutzsicheren Durchführung zumindest einer Leitung, insbesondere zumindest einer elektrischen Leitung, verstanden werden. Die Brandschutzkabelbox umfasst zur Durchführung der zumindest einen Leitung vorzugsweise einen Querschnitt, der vorteilhaft jede geometrische Form aufweisen kann, beispielsweise ist der Querschnitt der Brandschutzkabelbox rechteckig, dreieckig, rund oder der Gleichen. Die Brandschutzkabelbox kann als ein Quader, ein Zylinder oder der Gleichen ausgebildet sein.

Unter einem "Brandschutzeinsatzmodul" soll insbesondere eine vorgefertigte, brandschutzkonforme Montageeinheit verstanden werden, die bei der Montage am Einsatzoder Nutzungsort, beispielsweise in einem Installationsschacht, als Ganzes oder als Block montiert, insbesondere in eine Gebäudeöffnung eingesetzt, wird. Das Brandschutzeinsatzmodul wird vorzugsweise außerhalb des Einsatz- oder Nutzungsorts, beispielsweise in einer Werkstatt, einem Lager etc., hergestellt. Das Montagemodul ist vorzugsweise ohne Hilfsmittel, beispielsweise einen Kran, montierbar, insbesondere in die Gebäudeöffnung einsetzbar, d.h. vorzugsweise, dass das Brandschutzeinsatzmodul eine Größe und Gewicht aufweist, so dass ein oder zwei Monteure das Brandschutzeinsatzmodul durch Muskelkraft bewegen und positionieren können. Das Brandschutzeinsatzmodul ist vorzugsweise als ein quaderförmiger Einsatz mit zumindest einem integrierten oder eingebetteten Leitungsstück und/oder zumindest einer integrierten oder eingebetteten Brandschutzkabelbox ausgebildet. Das Brandschutzeinsatzmodul ist vorteilhaft mit dem zumindest einem Leitungsstück und/oder mit der zumindest einen Brandschutzkabelbox ausgerüstet.

Im montierten Zustand des Brandschutzeinsatzmoduls verschließt das Brandschutzeinsatzmodul zumindest im Wesentlichen die Gebäudeöffnung und bildet insbesondere einen Teil der die Gebäudeöffnung aufweisenden Gebäudewandung. Unter einem "montierten Zustand des Brandschutzeinsatzmoduls" soll insbesondere ein Zustand des Brandschutzeinsatzmoduls verstanden werden, in dem das Brandschutzeinsatzmodul in der Gebäudeöffnung eingesetzt und vorzugsweise eine zwischen dem Brandschutzeinsatzmodul und der die Gebäudeöffnung aufweisenden Gebäudewandung gebildete Fuge mit einer Dicht- und/oder Vergussmasse verschlossen ist.

Die zu verlegende oder durchzuführende Leitung kann eine medienführende Leitung oder eine elektrische Leitung sein. Die medienführende Leitung ist vorzugsweise als eine Ver- und/oder Entsorgungsleitung ausgebildet. Vorteilhaft ist die medienführende Leitung als eine Rohrleitung ausgebildet. Die medienführende Leitung kann als eine Wasserleitung, als ein Heizungsrohr, als eine Zu- oder Abluftleitung oder der Gleichen ausgebildet sein.

Die elektrische Leitung ist vorzugsweise als eine Elektroleitung ausgebildet. Vorteilhaft ist die elektrische Leitung als ein Elektro- und/oder Datenkabel ausgebildet. Die elektrische Leitung kann als eine Stromleitung, als eine Datenübertragungsleitung oder der Gleichen ausgebildet sein. Vorzugsweise ist das integrierte und/oder separate Leitungsstück als ein Ver- und/oder Entsorgungsleitungsstück oder als ein Elektroleitungsstück ausgebildet.

Die Gebäudeöffnung ist vorzugsweise als ein Gebäudewandungsdurchbruch ausgebildet. Vorteilhaft ist die Gebäudeöffnung in einer Gebäudewandung gebildet. Die Gebäudewandung kann als eine horizontale oder vertikale Gebäudewandung ausgeführt sein. Unter einer "Gebäudewandung" soll insbesondere eine Wand, eine Decke oder ein Boden eines Gebäudes, vorzugsweise innerhalb des Gebäudes, verstanden werden. Die Gebäudewandung kann eine Wand, eine Decke oder ein Boden eines Gebäudes sein. Der Gebäudewandungsdurchbruch ist vorzugsweise als ein Wanddurchbruch, ein Deckendurchbruch oder ein Bodendurchbruch ausgebildet.

Vorzugsweise ist das/die Leitungsstück/e und/oder die Brandschutzkabelbox brandschutzkonform ausgebildet und/oder angeordnet und/oder zueinander positioniert. Das Material, die Ausbildung und/oder die Positionierung des Brandschutzeinsatzmoduls und/oder des Leitungsstücks und/oder der Brandschutzkabelbox sind vorteilhaft durch geltende Brandschutzvorschriften am Einsatz- oder Nutzungsortes vorgegeben. Die Ausbildung, insbesondere die Abmessungen, des Brandschutzeinsatzmoduls ist vorzugsweise durch die Gebäudeöffnung vorgegeben. Insbesondere die Abmessungen des Brandschutzeinsatzmoduls können durch Urformen und/oder durch spanabhebende Fertigungsverfahren an die Abmessungen der Gebäudeöffnung angepasst sein oder werden. Unter "brandschutzkonform" soll insbesondere den geltenden Brandschutzvorschriften entsprechend oder die geltenden Brandschutzvorschriften erfüllend verstanden werden.

Das Leitungsstück ist vorteilhaft dazu vorgesehen, einen Teil der durch die Gebäudeöffnung zu verlegenden oder durchzuführenden Leitung zu bilden. In dem montierten Zustand des Brandschutzeinsatzmoduls ist das integrierte Leitungsstück vorzugsweise brandschutzsicher durch die Gebäudeöffnung hindurchgeführt und/oder die Brandschutzkabelbox brandschutzsicher in der Gebäudeöffnung positioniert oder angeordnet. In dem montierten und einem medienführend und/oder elektrisch angebundenen Zustand des Brandschutzeinsatzmoduls bildet das integrierte Leitungsstück vorzugsweise einen Teil der verlegten oder durchgeführten Leitung. In dem montierten und medienführend und/oder elektrisch angebundenen Zustand des Brandschutzeinsatzmoduls bildet das integrierte Leitungsstück vorzugsweise einen Teil einer Wasserleitung, einen Teil eines Heizungsrohrs, einen Teil einer Zu- oder Abluftleitung, einen Teil einer Stromleitung, einen Teil einer Datenübertragungsleitung oder der Gleichen. In dem montierten und einem medienführend und/oder elektrisch angebundenen Zustand des Brandschutzeinsatzmoduls verbindet das integrierte Leitungsstück vorzugsweise ein vom Brandschutzeinsatzmodul separates Leitungsstück auf der einen Seite des Brandschutzeinsatzmoduls medienführend oder elektrisch mit einem vom Brandschutzeinsatzmodul separaten Leitungsstück auf der anderen Seite des Brandschutzeinsatzmoduls, wodurch die verlegte oder durchgeführte Leitung brandschutzsicher durch die Gebäudewandung hindurchgeführt ist. Die verlegte oder durchgeführte Leitung ist vorteilhaft durch das eine separate Leitungsstück auf der einen Seite des Brandschutzeinsatzmoduls, das andere separate Leitungsstück auf der anderen Seite des Brandschutzeinsatzmoduls und das die separaten Leitungsstücke verbindende integrierte Leitungsstück ausgebildet.

Das integrierte Leitungsstück und das separate Leitungsstück können kraft-, form- und/oder stoffschlüssig miteinander verbunden werden. Unter einem "medienführend und/oder elektrisch angebundenen Zustand des Brandschutzeinsatzmoduls" soll insbesondere ein Zustand des Brandschutzeinsatzmoduls verstanden werden, in dem das integrierte Leitungsstück die verlegte oder durchgeführte Leitung bildend medienführend oder elektrisch an zumindest ein separates Leitungsstück angebunden ist, vorzugsweise medienführend oder elektrisch die beiden separaten Leitungsstücke miteinander verbindet. Zwischen oder durch medienführend miteinander verbundene/n Leitungsstücken kann ein Medium, wie beispielsweise Wasser oder Luft, strömen oder fließen. Zwischen oder durch elektrisch miteinander verbundene/n Leitungsstücken kann ein elektrischer Strom fließen und/oder Daten transportiert werden. Vorzugsweise ist das integrierte Leitungsstück gleichartig zu dem separaten, zur Anbindung vorgesehenen Leitungsstück ausgebildet. In dem montierten und medienführend und/oder elektrisch angebundenen Zustand des Brandschutzeinsatzmoduls ist das integrierte Leitungsstück vorteilhaft zumindest im Wesentlichen fluchtend mit dem separaten, zur Anbindung vorgesehenen Leitungsstück positioniert. Unter "vorgesehen" soll insbesondere speziell ausgebildet, ausgelegt, ausgestaltet, ausgestattet und/oder angeordnet verstanden werden.

Weiter wird vorgeschlagen, dass das integrierte Leitungsstück zwei offene Enden aufweist, die jeweils zur medienführenden oder elektrischen Anbindung an ein separates Leitungsstück vorgesehen sind. Unter einem "offenen Ende" soll insbesondere ein einen Strömungsquerschnitt bildendes oder aufweisendes Ende oder ein elektrisch kontaktierbares Ende verstanden werden. Das Brandschutzeinsatzmodul kann wenigstens ein Verschlusselement aufweisen, das das offene Ende für einen Transport und/oder Lagerung verschließt und/oder verdeckt.

Ferner wird vorgeschlagen, dass das Leitungsstück an zumindest einem seiner offenen Enden, insbesondere an beiden seiner offenen Enden, ein Verbindungsteil aufweist, wodurch die medienführende oder elektrische Anbindung des integrierten Leitungsstücks vereinfacht werden kann. Das Verbindungsteil und das integrierte Leitungsstück können separat voneinander oder zumindest teilweise einteilig miteinander ausgebildet sein. Das Verbindungsteil kann für eine kraft-, form- und/oder stoffschlüssige Verbindung vorgesehen sein. Das Verbindungsteil kann ein Gewinde, ein Klemmteil, eine Steckteil oder der Gleichen aufweisen oder bilden.

Um den Brandschutz durch das Brandschutzeinsatzmodul weiter zu verbessern, ist es insbesondere vorteilhaft, wenn das Leitungsstück ein Schottelement aufweist, das dazu vorgesehen ist, zumindest eines der offenen Enden im Brandfall oder durch Hitzeeinwirkung wenigstens teilweise zu verschließen. Dadurch kann ein Hohlraum des Leitungsstücks, insbesondere des medienführenden Leitungsstücks, verschlossen werden, wodurch ein Durchtritt von Flammen und/oder Rauch durch das Leitungsstück und damit durch das Brandschutzeinsatzmodul verhindert werden kann, auch wenn das separate Leitungsstück durch einen Brand beschädigt wurde. Das Schottelement verschließt das offene Ende vorteilhaft ab einer bestimmten Temperatur. Vorzugsweise weist das Verbindungsteil das Schottelement auf. Das Schottelement ist vorzugsweise dazu vorgesehen, in dem Brandfall durch Hitzeeinwirkung aufzuschäumen und/oder zu expandieren und dadurch insbesondere den Strömungsquerschnitt des integrieren Leitungsstücks zumindest zu reduzieren, vorteilhaft zu verschließen. Das Schottelement weist vorteilhaft intumeszentes Material auf oder ist durch intumeszentes Material gebildet.

Eine Verbindung der separaten Leitungsstücke kann vorteilhaft vereinfacht werden, wenn das Leitungsstück zumindest einseitig, insbesondere beidseitig, aus dem nichtbrennbaren Material ragt. Vorzugsweise ist zumindest eines der offenen Enden des integrierten Leitungsstücks beabstandet zum Brandschutzmaterial angeordnet. Vorteilhaft sind beide offenen Enden des integrierten Leitungsstücks beabstandet zum Brandschutzmaterial angeordnet.

Des Weiteren ist es vorteilhaft, wenn das Leitungsstück und/oder die Brandschutzkabelbox in das nichtbrennbare Material eingegossen ist/sind, wodurch ein besonders stabiles Brandschutzeinsatzmodul bereitgestellt werden kann. Um ein besonders brandschutzsicheres Brandschutzeinsatzmodul zu realisieren, ist es besonders vorteilhaft, wenn das nichtbrennbare Material ein Brandschutzmaterial, insbesondere ein Brandschutzmörtel, ist. Grundsätzlich kann das nichtbrennbare Material auch ein Beton oder der Gleichen sein.

In vorteilhaften Ausgestaltungen weist das Brandschutzeinsatzmodul zumindest ein Isolierelement auf, das zur brandschutzsicheren Isolierung, Dämmung und/oder Abschirmung das Leitungsstück zumindest teilweise umgibt, wobei das Isolierelement gemeinsam mit dem Leitungsstück in das nichtbrennbare Material fest integriert oder eingebettet ist. Das Isolierelement ragt vorzugsweise zumindest einseitig, insbesondere beidseitig, aus dem nichtbrennbaren Material heraus. Vorteilhaft ist das Isolierelement in das nichtbrennbare Material eingegossen. Vorzugsweise ist zwischen einer Außenmantelfläche des Leitungsstücks und einer Innenmantelfläche des Isolierelements kein Spalt oder Hohlraum gebildet. Vorteilhaft ist zwischen einer Außenmantelfläche des Isolierelements und dem nichtbrennbaren Material, insbesondere einer Innenmantelfläche des nichtbrennbaren Materials, kein Spalt oder Hohlraum gebildet.

Besonders vorteilhaft umfasst das Brandschutzeinsatzmodul zumindest ein weiteres, medienführendes oder elektrisches Leitungsstück und/oder zumindest eine weitere Brandschutzkabelbox, wobei die Leitungsstücke und/oder die Brandschutzkabelboxen in einer brandschutzkonformen Position und/oder einem brandschutzkonformen Abstand zueinander in das nichtbrennbare Material fest integriert oder eingebettet sind. Dadurch können die erforderlichen oder gewünschten Abstände zwischen den Leitungen eingehalten oder vorgegeben werden, wodurch Fehler beim Durchführen der Leitungen, bspw. durch fachfremde Firmen, vermieden werden können. Die zumindest zwei Leitungsstücke sind vorzugsweise zumindest im Wesentlichen parallel zueinander orientiert.

Die Position und/oder der Abstand der Leitungsstücke und/oder der Brandschutzkabelboxen zueinander resultiert vorzugsweise zumindest aus den geltenden Brandschutzvorschriften am Einsatz- oder Nutzungsort des Brandschutzeinsatzmoduls. Vorteilhaft werden die Gegebenheiten, die Vorgaben, die gesetzlichen Bestimmungen am Einsatz- oder Nutzungsort und/oder die Anforderungen von einem Auftragsgeber zur Verfügung gestellt oder definiert und in dem Brandschutzeinsatzmodul umgesetzt oder realisiert. Das Brandschutzeinsatzmodul muss dann nur noch am Einsatz- oder Nutzungsort in die Gebäudeöffnung eingesetzt und/oder montiert werden, um die brandschutzsichere Durchführung der Leitungen am Einsatz- oder Nutzungsort zu gewährleisten oder zu erfüllen. Die von dem Einsatz- oder Nutzungsort abhängigen Gegebenheiten, Vorgaben, gesetzlichen Bestimmungen und/oder Anforderungen werden bereits vorab durch das Brandschutzeinsatzmodul erfüllt, ohne am Einsatz- oder Nutzungsort gewesen zu sein. Abhängig vom dem Einsatz- oder Nutzungsort, von der Gebäudeöffnung und von den zu verlegenden Leitungen kann sich das Brandschutzeinsatzmodul in seinen Abmessungen, in dem nichtbrennbaren Material, den integrierten Leitungsstücken, den integrierten Brandschutzkabelboxen, den Abständen zwischen den Leitungsstücken und/oder den Brandschutzkabelboxen, den Isolierelementen etc. unterscheiden.

Grundsätzlich kann in dem nichtbrennbaren Material des Brandschutzeinsatzmoduls zusätzlich zu dem zumindest einem integrierten Leitungsstück, insbesondere zu den zumindest zwei integrierten Leitungsstücken, und/oder zusätzlich zu der zumindest einen Brandschutzkabelbox zumindest ein weiteres Element fest integriert oder eingebettet sein, wie beispielsweise ein Leerrohr, ein Hohlraum oder der Gleichen.

Um das Brandschutzeinsatzmodul in der Gebäudeöffnung zu positionieren oder zu halten, ist es weiter vorteilhaft, wenn das Brandschutzeinsatzmodul zumindest ein Halteelement aufweist, das dazu vorgesehen ist, sich an der die Gebäudeöffnung aufweisenden Gebäudewandung oder an einem Gegenhaltelement der Gebäudewandung abzustützen. Das Halteelement ist vorzugsweise fest in dem nichtbrennbaren Material integriert oder eingebettet, insbesondere eingegossen. Das Halteelement kann als ein umlaufender Vorsprung, als eine Auflagelasche, als eine Halteleiste oder der Gleichen ausgebildet sein. Besonders vorteilhaft bildet oder formt das nichtbrennbare Material das Halteelement einteilig aus. Das Halteelement ist vorteilhaft durch Urformen und/oder durch ein spanendes Fertigungsverfahren gebildet, insbesondere wenn das Halteelement einteilig durch das nichtbrennbare Material gebildet oder geformt ist. Grundsätzlich ist es denkbar, dass die Gebäudewandung zumindest eine Auflagefläche aufweist, auf die das in die Gebäudeöffnung eingesetzte Brandschutzeinsatzmodul aufliegt. Die Auflagefläche kann durch ein von der Gebäudewandung separates oder mit der Gebäudewandung einteilig gebildetes Gegenhaltelement, die insbesondere in die Gebäudeöffnung hineinragt, gebildet sein. Das Halteelement des Brandschutzeinsatzmoduls stützt sich vorteilhaft innerhalb der Gebäudeöffnung ab. Alternativ oder zusätzlich kann das Halteelement sich auf der Gebäudewandung außerhalb der Gebäudeöffnung, insbesondere an einer Bodenfläche der Gebäudeöffnung, abstützen.

In dem montierten Zustand des Brandschutzeinsatzmoduls fluchtet das nichtbrennbare Material einseitig, insbesondere beidseitig, vorzugsweise zumindest im Wesentlichen mit der Gebäudewandung. Grundsätzlich kann das nichtbrennbare Material einseitig oder beidseitig nicht mit der Gebäudewandung fluchten und dadurch mit der Gebäudewandung einseitig oder beidseitig eine Stufe bildend in der Gebäudeöffnung angeordnet sein. Das nichtbrennbare Material kann einseitig oder beidseitig aus der Gebäudeöffnung herausragend in der Gebäudeöffnung angeordnet sein.

Zur Verbesserung der Handhabung des Brandschutzeinsatzmoduls, insbesondere beim Transport und/oder beim Einsetzen in die Gebäudeöffnung, weist das Brandschutzeinsatzmodul vorzugsweise zumindest ein Griffelement auf. Das Griffelement ist vorzugsweise fest in das nichtbrennbare Material integriert oder eingebettet, insbesondere eingegossen. Vorteilhaft ist das Griffelement als ein Haltebügel, Haltegriff oder der Gleichen ausgebildet.

Ein zweiter Aspekt der Erfindung betrifft ein Herstellverfahren zur Herstellung eines vorgefertigten, einbaufertigen Brandschutzeinsatzmoduls zum brandschutzsicheren Verschließen einer zur Durchführung zumindest einer Leitung vorgesehenen Gebäudeöffnung, insbesondere zur Herstellung eines erfindungsgemäßen Brandschutzeinsatzmoduls. Zur Herstellung des Brandschutzeinsatzmoduls wird zumindest ein medienführendes oder elektrisches Leitungsstück und/oder zumindest eine Brandschutzkabelbox in ein nichtbrennbares Material fest integriert, wodurch ein Teil der durchzuführenden oder zu verlegenden Leitung und/oder die Brandschutzkabelbox bereits vorab in das Brandschutzeinsatzmodul integriert wird. Vorteilhaft wird das Leitungsstück und/oder die Brandschutzkabelbox außerhalb eines Einsatz- oder Nutzungsorts des Brandschutzeinsatzmoduls in das nichtbrennbare Material integriert. Vorzugsweise wird das medienführende oder elektrische Leitungsstück und/oder die Brandschutzkabelbox fest in das nichtbrennbare Material eingebettet, insbesondere eingegossen.

Besonders vorteilhaft ist es, wenn zur Integration des Leitungsstücks und/oder der Brandschutzkabelbox das Leitungsstück und/oder die Brandschutzkabelbox in oder durch eine Hohlform ragend gehalten und die Hohlform mit einer Vergussmasse aus nichtbrennbaren Material, insbesondere Brandschutzmörtel, gefüllt wird. Vorzugsweise wird nach der Erhärtung der Vergussmasse das Brandschutzeinsatzmodul mit integriertem Leitungsstück und/oder integrierter Brandschutzkabelbox aus der Hohlform entfernt. Vorteilhaft wird das Brandschutzeinsatzmodul gemäß den oder abhängig von den am Einsatz- oder Nutzungsort herrschenden Gegebenheiten, Vorgaben, gesetzlichen Brandschutzbestimmungen und/oder Anforderungen, die insbesondere vorab und vorteilhaft beim Bestellen des Brandschutzeinsatzmoduls von einem Auftragsgeber oder Kunden zur Verfügung gestellt oder definiert werden, brandschutzkonform hergestellt.

Ferner ist es vorteilhaft, wenn zumindest ein Griffelement in das nichtbrennbare Material fest integriert oder eingebettet, insbesondere eingegossen, wird, wodurch die Handhabung des Brandschutzeinsatzmoduls, insbesondere das Entfernen des Brandschutzeinsatzmoduls aus der Hohlform, der Transport des Brandschutzeinsatzmoduls und/oder das Einsetzen des Brandschutzeinsatzmoduls in die Gebäudeöffnung, vereinfacht werden kann. Das Griffelement kann nach dem Einsetzen des Brandschutzeinsatzmoduls in die Gebäudeöffnung entfernt, beispielsweise abgeschnitten, werden.

Ein dritter Aspekt der Erfindung betrifft ein Verfahren zur brandschutzsicheren Durchführung oder Verlegung zumindest einer Leitung durch eine Gebäudeöffnung. Die brandschutzsichere Durchführung oder Verlegung der Leitungen durch die Gebäudeöffnung wird erfindungsgemäß in mehrere Grundprozesse oder Verfahrensschritte zerlegt. Vorzugsweise weist die erfindungsgemäße Verlegung der Leitungen mindestens drei Grundprozesse oder Verfahrensschritte auf, wobei wenigstens zwei der Grundprozesse oder Verfahrensschritte örtlich voneinander getrennt sind. Der erste Grundprozess ist vorzugsweise als werkseitige Herstellung oder Vorfertigung des Brandschutzeinsatzmoduls ausgebildet. Das Verfahren zur brandschutzsicheren Durchführung oder Verlegung der zumindest einen Leitung durch die Gebäudeöffnung ist erfindungsgemäß durch folgende Grundprozesse oder Verfahrensschritte gekennzeichnet:
- Vorfertigung eines Brandschutzeinsatzmoduls mit zumindest einem intergierten, medienführenden oder elektrischen Leitungsstück und/oder zumindest einer integrierten Brandschutzkabelbox, insbesondere außerhalb eines Nutzungs- oder Einsatzorts des Brandschutzeinsatzmoduls;
- Montage des vorgefertigten Brandschutzeinsatzmoduls in die Gebäudeöffnung am Nutzungs- oder Einsatzort;
- medienführende oder elektrische Anbindung des integrierten Leitungsstücks und/oder Durchführung zumindest einer Leitung durch die integrierte Brandschutzkabelbox.

Vorzugsweise wird zur Vorfertigung des Brandschutzeinsatzmoduls das zumindest eine Leitungsstück und/oder die zumindest eine Brandschutzkabelbox fest in ein nichtbrennbares Material, insbesondere in ein Brandschutzmaterial, integriert oder eingebettet, insbesondere eingegossen. Zur Montage des Brandschutzeinsatzmoduls wird vorzugsweise das vorgefertigte Brandschutzeinsatzmodul in die Gebäudeöffnung eingesetzt oder montiert. Vorteilhaft wird anschließend eine zwischen dem Brandschutzeinsatzmodul und einer die Gebäudeöffnung aufweisenden Gebäudewandung gebildete Fuge mit einer nichtbrennbaren Dicht- und/oder Vergussmasse verschlossen oder vergossen. Zur medienführenden oder elektrischen Anbindung des zumindest einen integrierten Leitungsstücks wird vorzugsweise ein vom Brandschutzeinsatzmodul separates Leitungsstück der durchzuführenden oder zu verlegenden Leitung an das integrierte Leitungsstück medienführend oder elektrisch angebunden und/oder eine durchzuführende oder zu verlegende, elektrische Leitung durch die Brandschutzkabelbox durchgeführt. Vorzugsweise wird somit zur brandschutzsicheren Durchführung der Leitung ein Teilstück der Leitung und/oder eine Brandschutzkabelbox bereits vorab brandschutzkonform in das nichtbrennbare Material fest integriert und als Brandschutzeinsatzmodul mit integriertem Teilstück der Leitung und/oder der Brandschutzkabelbox in die Gebäudeöffnung eingesetzt und anschließend das integrierte Teilstück vorteilhaft mit einem anderen, vom Brandschutzeinsatzmodul separaten Teilstück der Leitung medienführend oder elektrisch verbunden und/oder eine elektrische Leitung durch die Brandschutzkabelbox geführt. Zur brandschutzsicheren Durchführung einer Leitung wird vorteilhaft das Brandschutzeinsatzmodul in die Gebäudeöffnung eingesetzt und ein vom dem Brandschutzeinsatzmodul separates Leitungsstück die durchzuführende Leitung bildend medienführend oder elektrisch an ein in dem nichtbrennbaren Material fest integrierten Leitungsstück angebunden.

Weitere Vorteile ergeben sich aus der folgenden Figurenbeschreibung. In den Figuren ist ein Ausführungsbeispiel der Erfindung dargestellt. Die Figuren, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Dabei zeigen:
- Fig. 1: ein vorgefertigtes Brandschutzeinsatzmodul in einem montierten, medienführend sowie elektrisch angebundenen Zustand,
- Fig. 2: das vorgefertigte Brandschutzeinsatzmodul in dem montierten Zustand, aber vor der medienführenden und elektrischen Anbindung,
- Fig. 3: das vorgefertigte Brandschutzeinsatzmodul in einer Seitenansicht vor der Montage und
- Fig. 4: das vorgefertigte Brandschutzeinsatzmodul vor der Montage perspektivisch dargestellt.

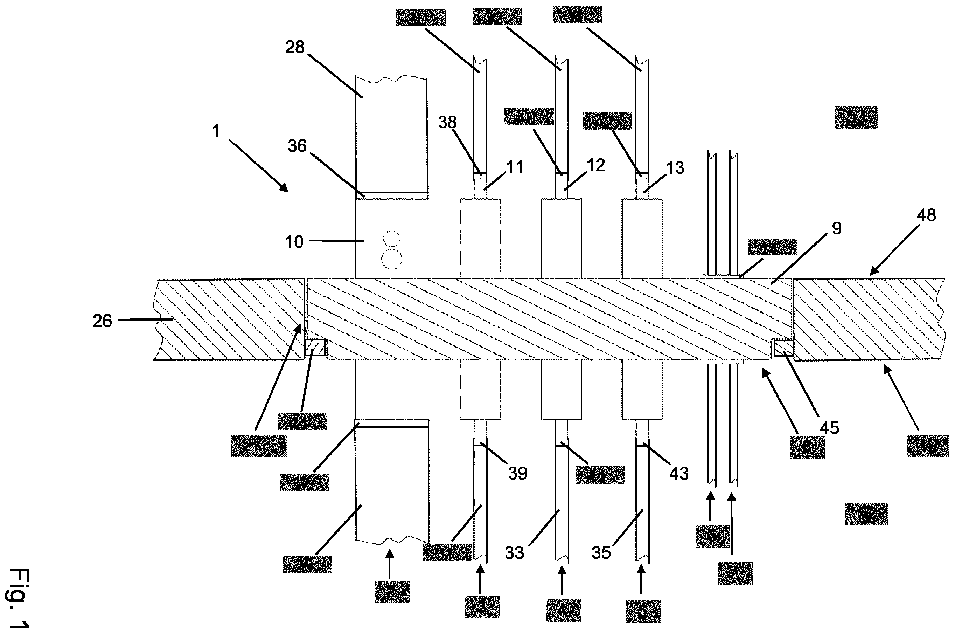

Figur 1 zeigt eine brandschutzsichere Verlegung oder Durchführung von Leitungen 2, 3, 4, 5, 6, 7 durch eine Gebäudewandung 26 im Bereich eines Installationsschachts eines mehrstöckigen Gebäudes. Um die Leitungen 2, 3, 4, 5, 6, 7 durch die Gebäudewandung 26 zu verlegen oder durchzuführen, umfasst die Gebäudewandung 26 eine Gebäudeöffnung 8. In die Gebäudeöffnung 8 ist ein vorgefertigtes, brandschutzkonformes Brandschutzeinsatzmodul 1 eingesetzt. In der Figur 1 ist ein Schnitt durch die Gebäudeöffnung 8 gezeigt, wobei der Schnitt nicht durch die Leitungen 2, 3, 4, 5, 6, 7 verläuft. In diesem Ausführungsbeispiel ist die Gebäudewandung 26 als eine Decke bzw. ein Boden ausgebildet. Beispielhaft trennt die Gebäudewandung 26 ein erstes Stockwerk 52 und ein zweites Stockwerk 53 voneinander.

Eine zwischen dem Brandschutzeinsatzmodul 1 und der die Gebäudeöffnung 8 aufweisenden Gebäudewandung 26 gebildete Fuge 27 ist mit einer Dicht- und/oder Vergussmasse verschlossen. Die Fuge 27 ist mit einer Silikonmasse, Spachtelmasse, Brandschutzmörtel, Brandschutzkleber, intumeszenter Masse oder der Gleichen verschlossen. Das Brandschutzeinsatzmodul 1 verschließt brandschutzsicher die Gebäudeöffnung 8.

Die Leitungen 2, 3, 4, 5, 6, 7 sind durch das Brandschutzeinsatzmodul 1 hindurch verlegt oder geführt. Die Gebäudeöffnung 8 ist als ein Gebäudewandungsdurchbruch ausgebildet. Sie ist in diesem Ausführungsbeispiel als ein Decken- bzw. Bodendurchbruch ausgebildet. Die verlegten oder durchgeführten Leitungen 2, 3, 4, 5 sind als medienführende Leitungen ausgebildet. Sie sind als Ver- oder Entsorgungsleitungen ausgebildet. In diesem Ausführungsbeispiel ist die Leitung 2 als ein Abwasserrohr, die Leitung 3 als ein Frischwasserrohr und die Leitungen 4, 5 als Heizungsrohre ausgebildet. Die verlegten oder durchgeführten Leitungen 6, 7 sind als elektrische Leitungen ausgebildet. Sie sind als Elektroleitungen ausgebildet. In diesem Ausführungsbeispiel ist die Leitung 6 als ein Elektrokabel und die Leitung 7 als ein Datenkabel ausgebildet.

Die Leitungen 2, 3, 4, 5 sind jeweils in Teilstücke geteilt. In diesem Ausführungsbeispiel sind die Leitungen 2, 3, 4, 5 jeweils dreiteilig ausgeführt. Die Leitung 2 weist ein erstes Leitungsstück 28, ein zweites Leitungsstück 10 und ein drittes Leitungsstück 29 auf. Das zweite Leitungsstück 10 der Leitung 2 verbindet das erste Leitungsstück 28 der Leitung 2 und das dritte Leitungsstück 29 der Leitung 2 medienführend miteinander. Zur medienführenden Verbindung der Leitungsstücke 28, 10, 29 zur Ausbildung der Leitung 2 umfasst die Leitung 2 ein erstes Verbindungsteil 36, das das erste Leitungssteil 28 und das zweite Leitungssteil 10 medienführend miteinander verbindet, und ein zweites Verbindungsteil 37, das das dritte Leitungssteil 29 und das zweite Leitungssteil 10 medienführend miteinander verbindet. Das erste Leitungsstück 28 kann als oberes Leitungsstück, das zweite Leitungsstück 10 als mittleres Leitungsstück und das dritte Leitungsstück 29 als unteres Leitungsstück bezeichnet werden.

Die Leitung 3 weist ein erstes Leitungsstück 30, ein zweites Leitungsstück 11 und ein drittes Leitungsstück 31 auf. Das zweite Leitungsstück 11 der Leitung 3 verbindet das erste Leitungsstück 30 der Leitung 3 und das dritte Leitungsstück 31 der Leitung 3 medienführend miteinander. Zur medienführenden Verbindung der Leitungsstücke 30, 11, 31 zur Ausbildung der Leitung 3 umfasst die Leitung 3 ein erstes Verbindungsteil 38, das das erste Leitungssteil 30 und das zweite Leitungssteil 11 medienführend miteinander verbindet, und ein zweites Verbindungsteil 39, das das dritte Leitungssteil 31 und das zweite Leitungssteil 11 medienführend miteinander verbindet. Das erste Leitungsstück 30 kann als oberes Leitungsstück, das zweite Leitungsstück 11 als mittleres Leitungsstück und das dritte Leitungsstück 31 als unteres Leitungsstück bezeichnet werden.

Die Leitung 4 weist ein erstes Leitungsstück 32, ein zweites Leitungsstück 12 und ein drittes Leitungsstück 33 auf. Das zweite Leitungsstück 12 der Leitung 4 verbindet das erste Leitungsstück 32 der Leitung 4 und das dritte Leitungsstück 33 der Leitung 4 medienführend miteinander. Zur medienführenden Verbindung der Leitungsstücke 32, 12, 33 zur Ausbildung der Leitung 4 umfasst die Leitung 4 ein erstes Verbindungsteil 40, das das erste Leitungssteil 32 und das zweite Leitungssteil 12 medienführend miteinander verbindet, und ein zweites Verbindungsteil 41, das das dritte Leitungssteil 33 und das zweite Leitungssteil 12 medienführend miteinander verbindet. Das erste Leitungsstück 32 kann als oberes Leitungsstück, das zweite Leitungsstück 12 als mittleres Leitungsstück und das dritte Leitungsstück 33 als unteres Leitungsstück bezeichnet werden.

Die Leitung 5 weist ein erstes Leitungsstück 34, ein zweites Leitungsstück 13 und ein drittes Leitungsstück 35 auf. Das zweite Leitungsstück 13 der Leitung 5 verbindet das erste Leitungsstück 34 der Leitung 5 und das dritte Leitungsstück 35 der Leitung 5 medienführend miteinander. Zur medienführenden Verbindung der Leitungsstücke 34, 13, 35 zur Ausbildung der Leitung 5 umfasst die Leitung 5 ein erstes Verbindungsteil 42, das das erste Leitungssteil 34 und das zweite Leitungssteil 13 medienführend miteinander verbindet, und ein zweites Verbindungsteil 43, das das dritte Leitungssteil 35 und das zweite Leitungssteil 13 medienführend miteinander verbindet. Das erste Leitungsstück 34 kann als oberes Leitungsstück, das zweite Leitungsstück 13 als mittleres Leitungsstück und das dritte Leitungsstück 35 als unteres Leitungsstück bezeichnet werden.

Die Leitungen 6, 7 sind in diesem Ausführungsbeispiel jeweils durchgehend ausgebildet. Grundsätzlich ist es denkbar, dass zumindest eine der Leitungen 6, 7 analog zu den Leitungen 2, 3, 4, 5 in Teilstücke geteilt sind. Dabei kann zumindest eine der Leitungen 6, 7 dreiteilig ausgeführt sein. Zumindest eine der Leitungen 6, 7 kann ein erstes Leitungsstück, ein zweites Leitungsstück und ein drittes Leitungsstück aufweisen. Das zweite Leitungsstück zumindest einer der Leitungen 6, 7 verbindet dann das erste Leitungsstück der entsprechenden Leitung 6,7 und das dritte Leitungsstück der entsprechenden Leitung 6, 7 elektrisch miteinander. Zur elektrischen Verbindung der Leitungsstücke zur Ausbildung der der jeweiligen Leitung 6, 7 umfasst die jeweilige Leitung 6, 7 ein erstes Verbindungsteil, das das erste Leitungssteil und das zweite Leitungssteil elektrisch miteinander verbindet, und ein zweites Verbindungsteil, das das dritte Leitungssteil und das zweite Leitungssteil elektrisch miteinander verbindet. Das erste Leitungsstück kann dann als oberes Leitungsstück, das zweite Leitungsstück als mittleres Leitungsstück und das dritte Leitungsstück als unteres Leitungsstück bezeichnet werden.

Das Brandschutzeinsatzmodul 1 ist aus einem nichtbrennbaren Material 9 gebildet. Es ist aus einem Brandschutzmaterial gebildet. In diesem Ausführungsbeispiel ist das Brandschutzeinsatzmodul 1 aus Brandschutzmörtel gebildet. Grundsätzlich kann das Brandschutzeinsatzmodul 1 auch aus einem anderen nichtbrennbaren Material 9 ausgebildet sein, beispielsweise aus Beton.

Das Brandschutzeinsatzmodul 1 ist als ein vorgefertigter, an die Gebäudeöffnung 8 angepasster, einbaufertiger Einsatz ausgebildet, das zur brandschutzsicheren Verlegung oder Durchführung der Leitungen 2, 3, 4, 5, 6, 7 als Ganzes in die Gebäudeöffnung 8 eingesetzt ist. Das Brandschutzeinsatzmodul 1 kann durch Urformen oder durch ein spanendes Verfahren an die Maße der Gebäudeöffnung 8 angepasst werden. Das Brandschutzeinsatzmodul 1 weist zur brandschutzsicheren Verlegung oder Durchführung der medienführenden Leitungen 2, 3, 4, 5 die zweiten Leitungsstücke 10, 11, 12, 13 der Leitungen 2, 3, 4, 5 und zur brandschutzsicheren Verlegung oder Durchführung der elektrischen Leitungen 6, 7 eine Brandschutzkabelbox 14 auf. Die zweiten Leitungsstücke 10, 11, 12, 13 und die Brandschutzkabelbox 14 sind in das nichtbrennbare Material 9 fest integriert. Sie sind fest in das nichtbrennbare Material 9 eingebettet. Die zweiten Leitungsstücke 10, 11, 12, 13 und die Brandschutzkabelbox 14 sind in das nichtbrennbare Material 9 eingegossen. Daher können die zweiten Leitungsstücke 10, 11, 12, 13 der Leitungen 2, 3, 4, 5 als in dem Brandschutzeinsatzmodul 1 integrierte Leitungsstücke und die ersten Leitungsstücke 28, 30, 32, 34 der Leitungen 2, 3, 4, 5 sowie die dritten Leitungsstücke 29, 31, 33, 35 der Leitungen 2, 3, 4, 5 als von dem Brandschutzeinsatzmodul 1 separate Leitungsstücke bezeichnet werden. Die Leitungen 6, 7 können als von dem Brandschutzeinsatzmodul 1 separate Leitungen bezeichnet werden.

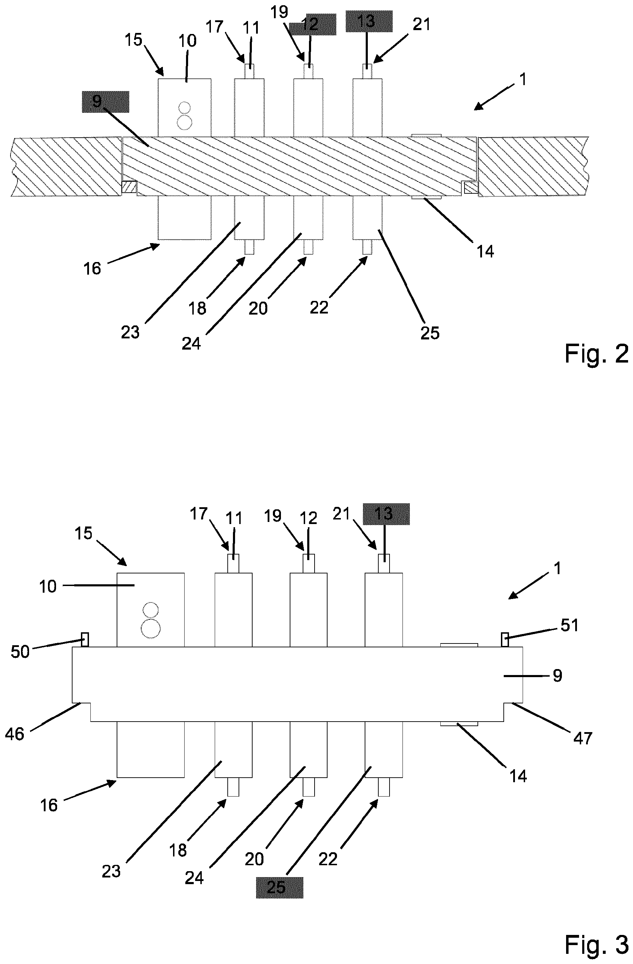

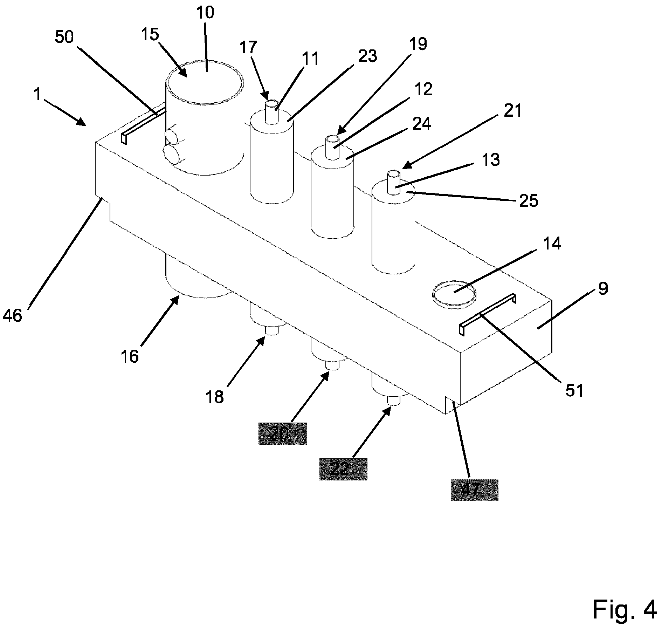

In der Figur 1 ist das Brandschutzeinsatzmodul 1 in seinem montierten, medienführend sowie elektrisch angebundenen Zustand dargestellt. In der Figur 2 ist das Brandschutzeinsatzmodul 1 in seinem montierten, aber nicht medienführend und elektrisch angebundenen Zustand dargestellt. In der Figur 2 ist das Brandschutzeinsatzmodul 1 in der Gebäudeöffnung 8 eingesetzt, aber die integrierten Leitungsstücke 10, 11, 12, 13 noch nicht medienführend an die separaten Leitungsstücke 28, 29, 30, 31, 32, 33, 34, 35 angebunden und die separaten Leitungen 6, 7 noch nicht durch die integrierte Brandschutzkabelbox 14 durchgeführt. Bereits durch das Einsetzen des Brandschutzeinsatzmoduls 1 in die Gebäudeöffnung 8 gemäß der Figur 2 sind die zweiten Leitungsstücke 10, 11, 12, 13 der zu verlegenden oder durchzuführenden Leitungen 2, 3, 4, 5 brandschutzsicher durch die Gebäudeöffnung 8 hindurchverlegt oder hindurchgeführt und die Brandschutzkabelbox 14 brandschutzsicher in der Gebäudeöffnung 8 positioniert. In den Figuren 3 und 4 ist das vorgefertigte Brandschutzeinsatzmodul 1 vor der Montage in seinem nicht montierten und medienführend sowie elektrisch nicht angebundenen Zustand dargestellt.

Die integrierten Leitungsstücke 10, 11, 12, 13 und die integrierte Brandschutzkabelbox 14 sind in einer brandschutzkonformen Position zueinander in das nichtbrennbare Material 9 integriert. Die bereits in das Brandschutzeinsatzmodul 1 integrierten Leitungsstücke 10, 11, 12, 13 bilden einen Teil oder ein Teilstück der durch die Gebäudeöffnung 8 verlegten oder durchgeführten Leitungen 2, 3, 4, 5. Ein Teil der Leitungen 2, 3, 4, 5 sind damit vor dem Einsetzen des Brandschutzeinsatzmoduls 1 in die Gebäudeöffnung 8 bereits brandschutzsicher durch das Brandschutzeinsatzmodul 1 verlegt oder durchgeführt. Die in das Brandschutzeinsatzmodul 1 integrierten Leitungsstücke 10, 11, 12, 13 bilden die zweiten Leitungsstücke 10, 11, 12, 13 der Leitungen 2, 3, 4, 5. Die integrierte Brandschutzkabelbox 14 bildet eine brandschutzsichere Durchführung für die durchgehenden Leitungen 6, 7. Sie bildet eine brandschutzsichere Durchführung für die elektrische Leitungen 6, 7. Die Leitungen 6,7 sind durch die Brandschutzkabelbox 14 hindurchgeführt oder hindurchverlegt.

Die in das Brandschutzeinsatzmodul 1 integrierten Leitungsstücke 10, 11, 12, 13 weisen jeweils zwei offene Enden 15, 16, 17, 18, 19, 20, 21, 22 auf, die in dem medienführend angebundenen Zustand des Brandschutzeinsatzmoduls 1 jeweils an ein von dem Brandschutzeinsatzmodul 1 separates Leitungsstück 28, 29, 30, 31, 32, 33, 34, 35 angebunden sind. Die von dem Brandschutzeinsatzmodul 1 separaten Leitungsstücke 28, 30, 32, 34 bilden die ersten Leitungsstücke 28, 30, 32, 34 der Leitungen 2, 3, 4, 5. Die von dem Brandschutzeinsatzmodul 1 separaten Leitungsstücke 29, 31, 33, 35 bilden die dritten Leitungsstücke 29, 31, 33, 35 der Leitungen 2, 3, 4, 5.

Das integrierte Leitungsstück 10 ist mit seinem ersten offenen Ende 15 medienführend an das separate Leitungsstück 28 und mit seinem zweiten offenen Ende 16 medienführend an das separate Leitungsstück 29 angebunden. Das integrierte Leitungsstück 10 ragt beidseitig aus dem nichtbrennbaren Material 9 heraus. Das integrierte Leitungsstück 10 und die separaten Leitungsstücke 28, 29 sind gleichartig ausgebildet. Sie sind aus dem gleichen Material gebildet und weisen den gleichen Durchmesser sowie den gleichen Strömungsquerschnitt auf. In diesem Ausführungsbeispiel weist das integrierte Leitungsstück 10 das erste Verbindungsteil 36 und das zweite Verbindungsteil 37 der Leitung 2 auf. Das integrierte Leitungsstück 10 umfasst ferner ein Schottelement, das im Brandfall das offene Ende 15 verschließt, und ein Schottelement, das im Brandfall das offene Ende 16 verschließt. In diesem Ausführungsbeispiel umfasst das erste Verbindungsteil 36 das eine Schottelement und das zweite Verbindungsteil 37 das andere Schottelement. Das Schottelement des Verbindungsteils 36 verschließt im Brandfall das erste offene Ende 15 des integrierten Leitungsstücks 10. Das Schottelement des Verbindungsteils 37 verschließt im Brandfall das zweite offene Ende 16 des integrierten Leitungsstücks 10. Zum Verschließen eines offenen Endes 15, 16 schäumt ein Material des Schottelements durch Hitzeeinwirkung auf. Die Schottelemente weisen intumeszentes Material auf. Die Schottelemente sind in den Figuren nicht sichtbar.

Das integrierte Leitungsstück 11 ist mit seinem ersten offenen Ende 17 medienführend an das separate Leitungsstück 30 und mit seinem zweiten offenen Ende 18 medienführend an das separate Leitungsstück 31 angebunden. Das integrierte Leitungsstück 11 ragt beidseitig aus dem nichtbrennbaren Material 9 heraus. Das integrierte Leitungsstück 11 und die separaten Leitungsstücke 30, 31 sind gleichartig ausgebildet. Sie sind aus dem gleichen Material gebildet und weisen den gleichen Durchmesser sowie den gleichen Strömungsquerschnitt auf. In diesem Ausführungsbeispiel weist das integrierte Leitungsstück 11 das erste Verbindungsteil 38 und das zweite Verbindungsteil 39 der Leitung 3 auf. Das integrierte Leitungsstück 11 umfasst ferner ein Schottelement, das im Brandfall das offene Ende 17 verschließt, und ein Schottelement, das im Brandfall das offene Ende 18 verschließt. In diesem Ausführungsbeispiel umfasst das erste Verbindungsteil 38 das eine Schottelement und das zweite Verbindungsteil 39 das andere Schottelement. Das Schottelement des Verbindungsteils 38 verschließt im Brandfall das erste offene Ende 17 des integrierten Leitungsstücks 11. Das Schottelement des Verbindungsteils 39 verschließt im Brandfall das zweite offene Ende 18 des integrierten Leitungsstücks 11. Zum Verschließen eines offenen Endes 17, 18 schäumt ein Material des Schottelements durch Hitzeeinwirkung auf. Die Schottelemente weisen intumeszentes Material auf. Die Schottelemente sind in den Figuren nicht sichtbar.

Das integrierte Leitungsstück 12 ist mit seinem ersten offenen Ende 19 medienführend an das separate Leitungsstück 32 und mit seinem zweiten offenen Ende 20 medienführend an das separate Leitungsstück 33 angebunden. Das integrierte Leitungsstück 12 ragt beidseitig aus dem nichtbrennbaren Material 9 heraus. Das integrierte Leitungsstück 12 und die separaten Leitungsstücke 32, 33 sind gleichartig ausgebildet. Sie sind aus dem gleichen Material gebildet und weisen den gleichen Durchmesser sowie den gleichen Strömungsquerschnitt auf. In diesem Ausführungsbeispiel weist das integrierte Leitungsstück 12 das erste Verbindungsteil 40 und das zweite Verbindungsteil 41 der Leitung 4 auf. Das integrierte Leitungsstück 12 umfasst ferner ein Schottelement, das im Brandfall das offene Ende 19 verschließt, und ein Schottelement, das im Brandfall das offene Ende 20 verschließt. In diesem Ausführungsbeispiel umfasst das erste Verbindungsteil 40 das eine Schottelement und das zweite Verbindungsteil 41 das andere Schottelement. Das Schottelement des Verbindungsteils 40 verschließt im Brandfall das erste offene Ende 19 des integrierten Leitungsstücks 12. Das Schottelement des Verbindungsteils 41 verschließt im Brandfall das zweite offene Ende 20 des integrierten Leitungsstücks 12. Zum Verschließen eines offenen Endes 19, 20 schäumt ein Material des Schottelements durch Hitzeeinwirkung auf. Die Schottelemente weisen intumeszentes Material auf. Die Schottelemente sind in den Figuren nicht sichtbar.

Das integrierte Leitungsstück 13 ist mit seinem ersten offenen Ende 21 medienführend an das separate Leitungsstück 34 und mit seinem zweiten offenen Ende 22 medienführend an das separate Leitungsstück 35 angebunden. Das integrierte Leitungsstück 13 ragt beidseitig aus dem nichtbrennbaren Material 9 heraus. Das integrierte Leitungsstück 13 und die separaten Leitungsstücke 34, 35 sind gleichartig ausgebildet. Sie sind aus dem gleichen Material gebildet und weisen den gleichen Durchmesser sowie den gleichen Strömungsquerschnitt auf. In diesem Ausführungsbeispiel weist das integrierte Leitungsstück 13 das erste Verbindungsteil 42 und das zweite Verbindungsteil 43 der Leitung 5 auf. Das integrierte Leitungsstück 13 umfasst ferner ein Schottelement, das im Brandfall das offene Ende 21 verschließt, und ein Schottelement, das im Brandfall das offene Ende 22 verschließt. In diesem Ausführungsbeispiel umfasst das erste Verbindungsteil 42 das eine Schottelement und das zweite Verbindungsteil 43 das andere Schottelement. Das Schottelement des Verbindungsteils 42 verschließt im Brandfall das erste offene Ende 21 des integrierten Leitungsstücks 13. Das Schottelement des Verbindungsteils 43 verschließt im Brandfall das zweite offene Ende 22 des integrierten Leitungsstücks 13. Zum Verschließen eines offenen Endes 21, 22 schäumt ein Material des Schottelements durch Hitzeeinwirkung auf. Die Schottelemente weisen intumeszentes Material auf. Die Schottelemente sind in den Figuren nicht sichtbar.

Das Brandschutzeinsatzmodul 1 weist weiter drei Isolierelemente 23, 24, 25 auf, die jeweils ein Leitungsstück 11, 12, 13 umgeben. Das Isolierelement 23 umgibt das integrierte Leitungsstück 11. Das Isolierelement 23 ist gemeinsam mit dem Leitungsstück 11 in das nichtbrennbare Material 9 fest integriert. Das Isolierelement 23 und das Leitungsstück 11 sind gemeinsam in das nichtbrennbare Material 9 fest eingebettet. Sie sind gemeinsam in das nicht brennbare Material 9 eingegossen. Das Isolierelement 24 umgibt das integrierte Leitungsstück 12. Das Isolierelement 24 ist gemeinsam mit dem Leitungsstück 12 in das nichtbrennbare Material 9 fest integriert. Das Isolierelement 25 und das Leitungsstück 12 sind gemeinsam in das nichtbrennbare Material 9 fest eingebettet. Sie sind gemeinsam in das nicht brennbare Material 9 eingegossen. Das Isolierelement 25 umgibt das integrierte Leitungsstück 13. Das Isolierelement 25 ist gemeinsam mit dem Leitungsstück 13 in das nichtbrennbare Material 9 fest integriert. Das Isolierelement 25 und das Leitungsstück 13 sind gemeinsam in das nichtbrennbare Material 9 fest eingebettet. Sie sind gemeinsam in das nicht brennbare Material 9 eingegossen. Die Isolierelemente 23, 24, 25 ragen jeweils beidseitig aus dem nichtbrennbaren Material 9 heraus. Die Isolierelemente 23, 24, 25 sind jeweils als eine Brandschutzrohrschale ausgebildet. Sie sind jeweils als eine nichtbrennbare kunstharzgebundene Steinwolle- Brandschutzrohrschale ausgebildet.

Um das Brandschutzeinsatzmodul 1 in der Gebäudeöffnung 8 zu positionieren und zu halten weist die Gebäudewandung 26 Gegenhaltelemente 44, 45 auf. Die Gegenhaltelemente 44, 45 ragen in die Gebäudeöffnung 8 hinein. Die Gegenhalteelemente 44, 45 sind in diesem Ausführungsbeispiel separat zur Gebäudewandung 26 ausgebildet. Sie sind fest mit der Gebäudewandung 26 verbunden. Die Gegenhalteelemente 44, 45 sind mit der Gebäudewandung 26 verschraubt. In diesem Ausführungsbeispiel sind die Gegenhaltelemente 44, 45 als Halteleisten ausgebildet. Grundsätzlich ist es denkbar, dass die Gegenhaltelemente 44, 45 einteilig durch die Gebäudewandung 26 gebildet sind. Beispielsweise können die durch die Gebäudewandung 26 einteilig gebildeten Halteelemente 44, 45 durch einen umlaufenden, in die Gebäudeöffnung 8 ragenden Gebäudewandvorsprung gebildet sein, der beispielsweise durch eine umlaufende Ausnehmung in der Gebäudewandung 26 realisiert ist.

In seinem montierten Zustand liegt das Brandschutzeinsatzmodul 1 auf den Gegenhaltelementen 44, 45 der Gebäudewandung 26 an. In diesem Ausführungsbeispiel weist das Brandschutzeinsatzmodul 1 Halteelemente 46, 47 auf, die in dem montierten Zustand auf den Gegenhaltelementen 44, 45 aufliegen. Die Halteelemente 46, 47 stützen sich in dem montierten Zustand auf den Gegenhaltelementen 44, 45 ab. Die Halteelemente 46, 47 sind einteilig durch das nichtbrennbare Material 9 gebildet. Die Halteelemente 46, 47 sind als ein Materialvorsprung ausgebildet. Die Halteelemente 46, 47 sind durch Urformen hergestellt. Alternativ können die Halteelemente 46, 47 durch ein spanendes Fertigungsverfahren, wie Schneiden, Sägen, Fräsen etc., hergestellt werden. Grundsätzlich können die Halteelemente 46, 47 auch separat zu dem nichtbrennbaren Material 9 gebildet sein. Dabei können die Halteelemente 46, 47 mit dem nichtbrennbaren Material 9 fest verbunden sein. Zur Verbindung mit dem nichtbrennbaren Material 9 können die Halteelemente 46, 47 in das nichtbrennbare Material 9 fest integriert oder eingebettet, insbesondere eingegossen, sein oder mit dem nichtbrennbaren Material 9 beispielsweise verschraubt sein.

In diesem Ausführungsbeispiel fluchtet das nichtbrennbare Material 9 zumindest im Wesentlichen mit einer Bodenfläche 48 und einer Deckenfläche 49 der Gebäudewandung 26. In alternativen Ausgestaltungen kann das nichtbrennbare Material 9 nicht mit der Bodenfläche 48 und/oder mit der Deckenfläche 49 fluchten. Beispielsweise kann das nichtbrennbare Material aus der Gebäudeöffnung 8 herausragen. Grundsätzlich ist es denkbar, dass die Halteelemente 46, 47 auf der Bodenfläche 48 der Gebäudewandung 26 aufliegen. Dabei kann ein Teil des nichtbrennbaren Materials 9 aus der Gebäudeöffnung 8 rausragen und ein Teil in die Gebäudeöffnung 8 reinragen.

Um das Einsetzen des Brandschutzeinsatzmoduls 1 in die Gebäudeöffnung 8 zu vereinfachen, weist das Brandschutzeinsatzmodul 1 zwei Griffelemente 50, 51 auf. Die Griffelemente 50, 51 sind fest in das nichtbrennbare Material 9 integriert. Sie sind fest in das nichtbrennbare Material 9 eingebettet. Die zwei Griffelemente 50, 51 sind in das nichtbrennbare Material 9 eingegossen. Die Griffelemente 50, 51 sind jeweils als ein Haltegriff ausgebildet. Nach dem Einsetzen des Brandschutzeinsatzmoduls 1 in die Gebäudeöffnung 8 können die Griffelemente 50, 51 entfernt, beispielsweise abgeschnitten, werden. In diesem Ausführungsbeispiel wurden die Griffelemente 50, 51 entfernt, wodurch dem Brandschutzeinsatzmodul 1 in seinem montierten Zustand die Griffelemente 50, 51 fehlen (vgl. Fig. 1).

Im Folgenden wird ein Herstellverfahren zur werkseitigen Herstellung des Brandschutzeinsatzmoduls 1 beschrieben. Abhängig von Kunden- oder Auftragsdaten, die den Nutzungsort, die Gebäudeöffnung und die zu verlegenden oder durchzuführenden Leitungen betreffen, wird entsprechend den Kunden- oder Auftragsdaten zumindest ein medienführendes Leitungsstück und/oder zumindest ein elektrisches Leitungsstück und/oder zumindest eine Brandschutzkabelbox in ein nichtbrennbares Material fest integriert. In diesem Ausführungsbeispiel wurde aus den Kunden- oder Auftragsdaten entnommen, dass die medienführenden Leitungen 2, 3, 4, 5 und die elektrischen Leitungen 6, 7 brandschutzsicher durch die Gebäudewandung 26 hindurchverlegt oder durchgeführt werden sollen, wobei die Gebäudewandung 26 dazu die Gebäudeöffnung 8 aufweist. Zur Durchführung der medienführenden Leitungen 2, 3, 4, 5 werden die vier medienführenden Leitungsstücke 10, 11, 12, 13, die im montierten und medienführend angebundenen Zustand des Brandschutzeinsatzmoduls 1 einen Teil der jeweiligen Leitung 2, 3, 4, 5 bilden, brandschutzkonform in das nichtbrennbare Material 9 fest eingebettet. Zur Durchführung der elektrischen Leitungen 6, 7 wird in diesem Ausführungsbeispiel eine Brandschutzkabelbox 14 brandschutzkonform in das nichtbrennbare Material 9 fest eingebettet. Dazu werden die Leitungsstücke 10, 11, 12, 13 durch eine Hohlform ragend und die Brandschutzkabelbox 14 in die Hohlform ragend gehalten und die Hohlform mit einer Vergussmasse aus dem nichtbrennbaren Material 9 gefüllt. Die Hohlform ist dabei an die Maße der Gebäudeöffnung 8 angepasst. Die Hohlform ist dabei in der Art ausgeführt, so dass das nichtbrennbare Material 9 einteilig die Halteelemente 46, 47 bildet.

Nach der Erhärtung der Vergussmasse wird das Brandschutzeinsatzmodul 1 mit integrierten Leitungsstücken 10, 11, 12, 13, der integrierten Brandschutzkabelbox 14 und den einteilig durch das erstarrte nichtbrennbare Material 9 gebildeten Halteelementen 46, 47 aus der Hohlform entfernt. Das erstarrte nichtbrennbare Material 9 kann bei Bedarf nachbearbeitet werden, beispielsweise durch ein spanendes Verfahren. Beispielsweise kann das erstarrte nichtbrennbare Material 9 bei Bedarf für die Gebäudeöffnung 8 in eine passende und/oder geeignete Form gebracht werden, beispielsweise zurechtgeschnitten, zurechtgesägt, zurechtgefräst werden. Nach der Erhärtung der Vergussmasse kann das Brandschutzeinsatzmodul 1 vor Ort in die Gebäudeöffnung 8 eingesetzt werden.

Zur brandschutzsicheren Verlegung oder Durchführung der Leitungen 2, 3, 4, 5, 6, 7 durch die Gebäudeöffnung 8 wird das vorgefertigte Brandschutzeinsatzmodul 1 aus dem nichtbrennbaren Material 9 mit den integrierten, medienführenden Leitungsstücken 10, 11, 12, 13, der integrierten Brandschutzkabelbox 14 und den durch das nichtbrennbare Material 9 gebildeten Halteelementen 46, 47 in die Gebäudeöffnung 8 eingesetzt. Anschließend wird die zwischen dem Brandschutzeinsatzmodul 1 und der die Gebäudeöffnung 8 aufweisenden Gebäudewandung 26 gebildete Fuge 27 mit der Dicht- und/oder Vergussmasse verschlossen und die integrierten Leitungsstücke 10, 11, 12, 13 an die separaten Leitungsstücke 28, 29, 30, 31, 32, 33, 34, 35 medienführend angeschlossen sowie die separaten elektrischen Leitungen 6, 7 durch die Brandschutzkabelbox 14 hindurchgeführt. Zur brandschutzsicheren Verlegung oder Durchführung der Leitung 2 werden die separaten Leitungsstücke 28, 29 medienführend an das integrierte Leitungsstück 10 angebunden. Zur brandschutzsicheren Verlegung oder Durchführung der Leitung 3 werden die separaten Leitungsstücke 30, 31 medienführend an das integrierte Leitungsstück 11 angebunden. Zur brandschutzsicheren Verlegung oder Durchführung der Leitung 4 werden die separaten Leitungsstücke 32, 33 medienführend an das integrierte Leitungsstück 12 angebunden. Zur brandschutzsicheren Verlegung oder Durchführung der Leitung 5 werden die separaten Leitungsstücke 34, 35 medienführend an das integrierte Leitungsstück 13 angebunden.

Zur brandschutzsicheren Durchführung oder Verlegung der Leitungen 2, 3, 4, 5, 6, 7 wurden daher drei Grundprozesse oder Verfahrensschritte angewandt. Im ersten Grundprozess oder Verfahrensschritt wurde das Brandschutzeinsatzmodul 1 mit den integrierten Leitungsstücken 10, 11, 12, 13 und der Brandschutzkabelbox 14 werkseitig vorgefertigt. Im zweiten Grundprozess oder Verfahrensschritt wurde das vorgefertigte Brandschutzeinsatzmodul 1 vor Ort in die Gebäudeöffnung 8 montiert. Im dritten Grundprozess oder Verfahrensschritt wurde das vorgefertigte Brandschutzeinsatzmodul 1 medienführend und elektrisch angebunden, indem die integrierten Leitungsstücke 10, 11, 12, 13 an die separaten Leitungsstücke 28, 29, 30, 31, 32, 33, 34, 35 medienführend angeschlossen sowie die separaten elektrischen Leitungen 6, 7 durch die Brandschutzkabelbox 14 hindurchgeführt wurden.

### Bezugszeichenliste

- 1: Brandschutzeinsatzmodul
- 2: Leitung
- 3: Leitung
- 4: Leitung
- 5: Leitung
- 6: Leitung
- 7: Leitung
- 8: Gebäudeöffnung
- 9: Material
- 10: integriertes Leitungsstück
- 11: integriertes Leitungsstück
- 12: integriertes Leitungsstück
- 13: integriertes Leitungsstück
- 14: Brandschutzkabelbox
- 15: offenes Ende
- 16: offenes Ende
- 17: offenes Ende
- 18: offenes Ende
- 19: offenes Ende
- 20: offenes Ende
- 21: offenes Ende
- 22: offenes Ende
- 23: Isolierelement
- 24: Isolierelement
- 25: Isolierelement
- 26: Gebäudewandung
- 27: Fuge
- 28: separates Leitungsstück
- 29: separates Leitungsstück
- 30: separates Leitungsstück
- 31: separates Leitungsstück
- 32: separates Leitungsstück
- 33: separates Leitungsstück
- 34: separates Leitungsstück
- 35: separates Leitungsstück
- 36: Verbindungsteil
- 37: Verbindungsteil
- 38: Verbindungsteil
- 39: Verbindungsteil
- 40: Verbindungsteil
- 41: Verbindungsteil
- 42: Verbindungsteil
- 43: Verbindungsteil
- 44: Gegenhaltelement
- 45: Gegenhaltelement
- 46: Halteelement
- 47: Halteelement
- 48: Bodenfläche
- 49: Deckenfläche
- 50: Griffelement
- 51: Griffelement
- 52: Stockwerk
- 53: Stockwerk

## Patentansprüche

1. Brandschutzeinsatzmodul zum brandschutzsicheren Verschließen einer zur Durchführung zumindest einer Leitung (2, 3, 4, 5, 6, 7) vorgesehenen Gebäudeöffnung (8), das zumindest im Wesentlichen aus einem nichtbrennbaren Material (9) gebildet ist und zumindest ein Leitungsstück (10, 11, 12, 13), das medienführend oder elektrisch ausgebildet ist, und/oder zumindest eine Brandschutzkabelbox (14) aufweist, das/die in das nichtbrennbare Material (9) integriert ist/sind.

2. Brandschutzeinsatzmodul nach Anspruch 1,
**dadurch gekennzeichnet, dass**
das Leitungsstück (10, 11, 12, 13) dazu vorgesehen ist, einen Teil der durch die Gebäudeöffnung (8) durchzuführenden Leitung (2, 3, 4, 5) zu bilden.

3. Brandschutzeinsatzmodul nach Anspruch 1 oder 2,
**dadurch gekennzeichnet, dass**
das Leitungsstück (10, 11, 12, 13) zwei offene Enden (15 - 22) aufweist, die zur medienführenden oder elektrischen Anbindung vorgesehen sind.

4. Brandschutzeinsatzmodul nach Anspruch 3,
**dadurch gekennzeichnet, dass**
das Leitungsstück (10, 11, 12, 13) ein Schottelement aufweist, das dazu vorgesehen ist, zumindest eines der offenen Enden (15 - 22) im Brandfall wenigstens teilweise zu verschließen.

5. Brandschutzeinsatzmodul nach einem der vorhergehenden Ansprüche,
**dadurch gekennzeichnet, dass**
das Leitungsstück (10, 11, 12, 13) zumindest einseitig, insbesondere beidseitig, aus dem nichtbrennbaren Material (9) ragt.

6. Brandschutzeinsatzmodul nach einem der vorhergehenden Ansprüche,
**dadurch gekennzeichnet, dass**
das Leitungsstück (10, 11, 12, 13) und/oder die Brandschutzkabelbox (14) in das nichtbrennbare Material (9) eingegossen ist/sind.

7. Brandschutzeinsatzmodul nach einem der vorhergehenden Ansprüche,
**dadurch gekennzeichnet, dass**
das nichtbrennbare Material (9) ein Brandschutzmaterial, insbesondere ein Brandschutzmörtel, ist.

8. Brandschutzeinsatzmodul nach einem der vorhergehenden Ansprüche,
**gekennzeichnet durch**
zumindest ein Isolierelement (23, 24, 25), das das Leitungsstück (10, 11, 12, 13) zumindest teilweise umgibt, wobei das Isolierelement (23, 24, 25) gemeinsam mit dem Leitungsstück (10, 11, 12, 13) in das nichtbrennbare Material (9) integriert ist.

9. Brandschutzeinsatzmodul nach einem der vorhergehenden Ansprüche,
**gekennzeichnet durch**
zumindest ein weiteres, medienführendes oder elektrisches Leitungsstück (10, 11, 12, 13), wobei die Leitungsstücke (10, 11, 12, 13) in einer brandschutzkonformen Position zueinander in das nichtbrennbare Material (9) integriert sind.

10. Herstellverfahren zur Herstellung eines Brandschutzeinsatzmoduls (1) zum brandschutzsicheren Verschließen einer zur Durchführung zumindest einer Leitung (2, 3, 4, 5, 6, 7) vorgesehenen Gebäudeöffnung (8), insbesondere eines Brandschutzeinsatzmoduls (1) nach einem der Ansprüche 1 bis 9, in dem zumindest ein Leitungsstück (10, 11, 12, 13), das medienführend oder elektrisch ausgebildet ist, und/oder zumindest eine Brandschutzkabelbox (14) in ein nichtbrennbares Material (9) integriert wird.

11. Herstellverfahren nach Anspruch 10,
**dadurch gekennzeichnet, dass**
das Leitungsstück (10, 11, 12, 13) und/oder die Brandschutzkabelbox (14) in oder durch eine Hohlform ragend gehalten und die Hohlform mit einer Vergussmasse aus nichtbrennbaren Material (9) gefüllt wird.

12. Herstellverfahren nach Anspruch 11,
**dadurch gekennzeichnet, dass**
nach der Erhärtung der Vergussmasse das Brandschutzeinsatzmodul (1) mit integriertem Leitungsstück (10, 11, 12, 13) und/oder integrierter Brandschutzkabelbox (14) aus der Hohlform entfernt wird.

13. Verfahren zur brandschutzsicheren Durchführung zumindest einer Leitung (2, 3, 4, 5, 6, 7) durch eine Gebäudeöffnung (8),
**gekennzeichnet durch folgende Verfahrensschritte:**
- Vorfertigung eines Brandschutzeinsatzmoduls (1) mit zumindest einem intergierten Leitungsstück (10, 11, 12, 13) und/oder zumindest einer integrierten Brandschutzkabelbox (14);
- Montage des Brandschutzeinsatzmoduls (1) in die Gebäudeöffnung (8);
- medienführende oder elektrische Anbindung des integrierten Leitungsstücks (10, 11, 12, 13) und/oder Durchführung zumindest einer Leitung durch die integrierte Brandschutzkabelbox (14).

14. Verfahren nach Anspruch 13,
**dadurch gekennzeichnet, dass**
zur Montage das Brandschutzeinsatzmodul (1) in die Gebäudeöffnung (8) eingesetzt und eine zwischen dem Brandschutzeinsatzmodul (1) und einer die Gebäudeöffnung (8) aufweisenden Gebäudewandung (26) gebildete Fuge (27) mit einer Dicht- und/oder Vergussmasse verschlossen wird.

15. Verfahren nach Anspruch 13 oder 14,
**dadurch gekennzeichnet, dass**
zur medienführenden oder elektrischen Anbindung ein vom Brandschutzeinsatzmodul (1) separates Leitungsstück (28 - 35) an das integrierte Leitungsstück (10, 11, 12, 13) medienführend oder elektrisch angebunden wird.
